(19) Europäisches Patentamt / European Patent Office / Office européen des brevets

(11) EP 4 116 351 A1

(12) **EUROPÄISCHE PATENTANMELDUNG**

(43) Veröffentlichungstag: **11.01.2023 Patentblatt 2023/02**

(21) Anmeldenummer: **22187191.6**

(22) Anmeldetag: **16.06.2016**

(51) Internationale Patentklassifikation (IPC):
***C08G 18/66*** *(2006.01)* ***C08G 18/76*** *(2006.01)*
***C08J 9/00*** *(2006.01)* ***C08J 9/08*** *(2006.01)*
***C08J 9/14*** *(2006.01)* ***C08G 18/09*** *(2006.01)*
***C08K 5/11*** *(2006.01)* ***C08G 18/40*** *(2006.01)*
***C08G 18/48*** *(2006.01)* ***C08G 18/42*** *(2006.01)*

(52) Gemeinsame Patentklassifikation (CPC):
(C-Sets verfügbar)
**C08G 18/7664; C08G 18/092; C08G 18/4018; C08G 18/4288; C08G 18/4816; C08G 18/6696; C08J 9/08; C08K 5/11;** C08G 2110/0025; C08G 2110/005; C08G 2110/0083; C08J 9/0023; C08J 9/141; C08J 2201/022; C08J 2203/02;

(Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2015 EP 15172672**

(62) Dokumentnummer(n) der früheren Anmeldung(en) nach Art. 76 EPÜ:
**16729904.9 / 3 310 835**

(71) Anmelder: **BASF SE**
**67056 Ludwigshafen am Rhein (DE)**

(72) Erfinder:
- **Giesker, Christiane**
  **49080 Osnabrück (DE)**
- **Elbing, Mark**
  **28215 Bremen (DE)**
- **Krogmann, Jörg**
  **49393 Lohne (DE)**
- **Lax, Patrick**
  **49448 Lemförde (DE)**

(74) Vertreter: **Altmann Stößel Dick Patentanwälte PartG mbB**
**Isartorplatz 1**
**80331 München (DE)**

Bemerkungen:
Diese Anmeldung ist am 27-07-2022 als Teilanmeldung zu der unter INID-Code 62 erwähnten Anmeldung eingereicht worden.

(54) **VERFAHREN ZUR HERSTELLUNG VON POLYURETHAN-HARTSCHAUMSTOFFEN**

(57) Die vorliegende Erfindung betrifft ein Verfahren zur Herstellung eines Polyurethan- oder Polyisocyanurat-Hartschaumstoffs, umfassend die Umsetzung von mindestens einem Polyisocyanat, und einer Polyolzusammensetzung (PZ), wobei die Polyolzusammensetzung (PZ) mindestens eine Verbindung mit mindestens zwei gegenüber Isocyanatgruppen reaktiven Wasserstoffatomen enthält und mindestens eine Verbindung (I) ausgewählt aus der Gruppe bestehend aus Dicarbonsäurediestern von Dicarbonsäuren mit 2 bis 18 C-Atomen und Tricarbonsäuretriestern von Tricarbonsäuren mit 3 bis 18 C-Atomen, wobei bei der Umsetzung mindestens ein Treibmittel eingesetzt wird. Weiterhin betrifft die vorliegende Erfindung Polyurethan- oder Polyisocyanurat-Hartschaumstoffe, erhältlich oder erhalten nach einem derartigen Verfahren, sowie eine Polyolzusammensetzung (PZ), mindestens enthaltend eine Verbindung mit mindestens zwei gegenüber Isocyanatgruppen reaktiven Wasserstoffatomen und mindestens eine Verbindung (I) ausgewählt aus der Gruppe bestehend aus Dicarbonsäurediestern von Dicarbonsäuren mit 2 bis 18 C-Atomen und Tricarbonsäuretriestern von Tricarbonsäuren mit 3 bis 18 C-Atomen. Die vorliegende Erfindung betrifft auch die Verwendung einer derartigen Polyolzusammensetzung (PZ) zur Herstellung von Polyurethan- oder Polyisocyanurat-Hartschaumstoffen sowie die Verwendung eines erfindungsgemäßen Polyurethan- oder Polyisocyanuratschaumstoffs als oder zur Herstellung von Isoliermaterialien, vorzugsweise Dämmplatten, Sandwichelementen, Warmwasserspeichern, Boilern, Kühlapparaturen, Isolierschäumen, Kühlgeräten oder Gefriergeräten.

EP 4 116 351 A1

(52) Gemeinsame Patentklassifikation (CPC): (Forts.)
C08J 2203/14; C08J 2203/204; C08J 2205/10;
C08J 2375/04

C-Sets
**C08K 5/11, C08L 75/04**

## Beschreibung

Die vorliegende Erfindung betrifft ein Verfahren zur Herstellung eines Polyurethan- oder Polyisocyanurat-Hartschaumstoffs, umfassend die Umsetzung von mindestens einem Polyisocyanat, und einer Polyolzusammensetzung (PZ), wobei die Polyolzusammensetzung (PZ) mindestens eine Verbindung mit mindestens zwei gegenüber Isocyanatgruppen reaktiven Wasserstoffatomen enthält und mindestens eine Verbindung (I) ausgewählt aus der Gruppe bestehend aus Dicarbonsäurediestern von Dicarbonsäuren mit 2 bis 18 C-Atomen und Tricarbonsäuretriestern von Tricarbonsäuren mit 3 bis 18 C-Atomen, wobei bei der Umsetzung mindestens ein Treibmittel eingesetzt wird. Weiterhin betrifft die vorliegende Erfindung Polyurethan- oder Polyisocyanurat-Hartschaumstoffe, erhältlich oder erhalten nach einem derartigen Verfahren, sowie eine Polyolzusammensetzung (PZ), mindestens enthaltend eine Verbindung mit mindestens zwei gegenüber Isocyanatgruppen reaktiven Wasserstoffatomen und mindestens eine Verbindung (I) ausgewählt aus der Gruppe bestehend aus Dicarbonsäurediestern von Dicarbonsäuren mit 2 bis 18 C-Atomen und Tricarbonsäuretriestern von Tricarbonsäuren mit 3 bis 18 C-Atomen. Die vorliegende Erfindung betrifft auch die Verwendung einer derartigen Polyolzusammensetzung (PZ) zur Herstellung von Polyurethan- oder Polyisocyanurat-Hartschaumstoffen.

Polyurethan- und Polyisocyanurat-Hartschaumstoffe sind seit langem bekannt und werden vorwiegend zur Wärme- und Kälteisolation, z. B. in Kühlgeräten, in Warmwasserspeichern, in Fernwärmerohren oder im Bauwesen, beispielsweise in Sandwichelementen, eingesetzt.

Ihre Herstellung erfolgt zumeist durch Umsetzung von Polyisocyanaten mit Verbindungen mit mindestens zwei mit Isocyanatgruppen reaktiven Wasserstoffatomen in Anwesenheit von Katalysatoren, Treibmitteln sowie Hilfs- und/oder Zusatzstoffen.

Wesentliche Anforderungen an Polyurethan-Hartschaumstoffe sind eine niedrige Wärmeleitfähigkeit, eine gute Fließfähigkeit, eine ausreichende Haftung des Schaums an den Deckschichten und gute mechanische Eigenschaften.

Insbesondere bei Polyurethan-Hartschaumstoffen, die unter Verwendung von Wasser als Treibmittel hergestellt werden, ist die Haftung der Schaumstoffe häufig unzureichend. US 5798533 beschreibt die Verwendung spezieller Katalysatoren zur Verbesserung der Haftung von rein wassergetriebenen Hartschäumen zur Verbesserung der Haftung zu Polystyrol oder ABS für den Einsatz in Kühlgeräten. Dies kann jedoch die Fließfähigkeit und mechanischen Eigenschaften der Schaumstoffe negativ beeinflussen. WO 2004/009667 beschreibt die Verwendung von Graft-Polyolen in rein wassergetriebenen Hartschaum-Systemen zur Verringerung der Versprödung des Schaums sowie der Verbesserung der Haftung zu anderen Substraten. Graft-Polyole sind jedoch teuer und häufig unverträglich mit anderen Bestandteilen der Polyurethan-Systeme. EP 1806374 beschreibt Polyurethan-Hartschaumstoffe für Kühlgeräte mit verbesserter Haftung durch Verwendung von alkoxylierten Monoaminen wie z.B. Anilin. Diese Verbindungen können jedoch die Verarbeitungseigenschaften der Schaumstoffe negativ beeinflussen.

Polyurethan-Hartschaumstoffe, die ganz oder überwiegend unter Verwendung von Wasser als Treibmittel hergestellt werden, weisen eine verbesserte Haftung auf, wenn das Schaumsystem Rizinusöl und eine Verbindung, ausgewählt aus der Gruppe, enthaltend Alkylencarbonate, Kohlensäureamide und Pyrrolidone, enthält.

US 2008051481 beschreibt flammgeschützte Polyurethan-Hartschaumstoffe, die unter Verwendung von halogenierten, insbesondere bromierten Polyolen hergestellt wurden. Als Treibmittel werden vorzugsweise physikalische Treibmittel, gegebenenfalls unter Mitverwendung von Wasser als Co-Treibmittel, verwendet. Um die Haftung dieser Produkte zu verbessern, wird der Einsatz von Haftvermittlern beschrieben. Neben einer Reihe von anderen Stoffen, wird auch die Verwendung von Propylencarbonat oder Rizinusöl vorgeschlagen.

Die in US 2008051481 beschriebenen halogenierten Flammschutzmittel sind jedoch für den Einsatz in Kühlgeräten ungeeignet.

WO 2011/039082 A1 offenbart Polyurethan-Hartschaumstoffe, die ganz oder überwiegend unter Verwendung von Wasser als Treibmittel hergestellt werden, eine verbesserte Haftung aufweisen, wenn das Schaumsystem Rizinusöl und eine Verbindung, ausgewählt aus der Gruppe, enthaltend Alkylencarbonate, Kohlensäureamide und Pyrrolidone, enthält. Bei diesen Systemen werden sehr gute Haftungswerte erreicht. Die Formulierungen sind jedoch für längere Lagerung ungeeignet, da es zur Zersetzung der Einsatzstoffe kommen kann, wobei es zu einer Gasentwicklung kommen kann.

Der vorliegenden Erfindung lag demgemäß die Aufgabe zugrunde, Polyurethan-Hartschaumstoffe und Polyisocyanurat-Hartschaumstoffe bzw. Verfahren zu deren Herstellung bereitzustellen, die gute Haftungswerte aufweisen. Eine weitere Aufgabe der vorliegenden Erfindung war es, Polyurethan-Hartschaumstoffe und Polyisocyanurat-Hartschaumstoffe bzw. Verfahren zu deren Herstellung bereitzustellen, die aus phasenstabilen Komponenten hergestellt werden können. Eine weitere der vorliegenden Erfindung zugrundeliegende Aufgabe war es, die eingesetzte Menge an organischen Carbonaten in der Polyolzusammensetzung zu reduzieren.

Erfindungsgemäß wird diese Aufgabe gelöst durch ein Verfahren zur Herstellung eines Polyurethan- oder Polyisocyanurat-Hartschaumstoffs, umfassend die Umsetzung von

a) mindestens einem Polyisocyanat, und

b) einer Polyolzusammensetzung (PZ),

wobei die Polyolzusammensetzung (PZ) mindestens eine Verbindung mit mindestens zwei gegenüber Isocyanatgruppen reaktiven Wasserstoffatomen enthält und mindestens eine Verbindung (I) ausgewählt aus der Gruppe bestehend aus Dicarbonsäurediestern von Dicarbonsäuren mit 2 bis 18 C-Atomen und Tricarbonsäuretriestern von Tricarbonsäuren mit 3 bis 18 C-Atomen, wobei bei der Umsetzung mindestens ein Treibmittel eingesetzt wird.

Im Rahmen der vorliegenden Erfindung wird eine Polyolzusammensetzung (PZ) eingesetzt. Die Polyolzusammensetzung (PZ) enthält mindestens eine Verbindung mit mindestens zwei gegenüber Isocyanatgruppen reaktiven Wasserstoffatomen und mindestens eine Verbindung (I) ausgewählt aus der Gruppe bestehend aus Dicarbonsäurediestern von Dicarbonsäuren mit 2 bis 18 C-Atomen und Tricarbonsäuretriestern von Tricarbonsäuren mit 3 bis 18 C-Atomen. Dabei kann die Polyolzusammensetzung weitere Komponenten, beispielsweise auch ein chemisches Treibmittel, enthalten. Üblicherweise wird ein im Verfahren eingesetztes physikalisches Treibmittel nicht als Bestandteil der Polyolzusammensetzung betrachtet.

Bei dem erfindungsgemäßen Verfahren wird mindestens ein Treibmittel eingesetzt. Dabei kann das Treibmittel dem mindestens einen Polyisocyanat zugesetzt werden, der Polyolzusammensetzung oder separat zudosiert werden. Vorzugsweise wird das mindestens eine Treibmittel im Rahmen der vorliegenden Erfindung der Polyolzusammensetzung zugesetzt.

Demgemäß betrifft die vorliegende Erfindung gemäß einer weiteren Ausführungsform auch ein Verfahren zur Herstellung eines Polyurethan- oder Polyisocyanurat-Hartschaumstoffs, umfassend die Umsetzung von mindestens einem Polyisocyanat, und einer Polyolzusammensetzung (PZ), wobei die Polyolzusammensetzung (PZ) das mindestens eine Treibmittel enthält.

Erfindungsgemäß ist es auch möglich, dass beispielsweise ein Treibmittel der Polyolzusammensetzung (PZ) zugesetzt wird und ein weiteres Treibmittel separat zudosiert wird.

Das erfindungsgemäße Verfahren umfasst die Umsetzung von mindestens einem Polyisocyanat und einer Polyolzusammensetzung (PZ). Die Polyolzusammensetzung (PZ) enthält mindestens eine Verbindung mit mindestens zwei gegenüber Isocyanatgruppen reaktiven Wasserstoffatomen und mindestens eine Verbindung (I) ausgewählt aus der Gruppe bestehend aus Dicarbonsäurediestern von Dicarbonsäuren mit 2 bis 18 C-Atomen und Tricarbonsäuretriestern von Tricarbonsäuren mit 3 bis 18 C-Atomen.

Es wurde überraschend gefunden, dass mit dem erfindungsgemäßen Verfahren Polyurethan-Hartschaumstoffe und Polyisocyanurat-Hartschaumstoffe erhalten werden, die gute Haftungswerte aufweisen und gleichzeitig die eingesetzten Komponenten eine gute Lagerstabilität aufweisen. Weiterhin ermöglicht es das erfindungsgemäße Verfahren, die eingesetzte Menge an organischen Carbonaten zu reduzieren. Erfindungsgemäß enthält die Polyolzusammensetzung (PZ) organische Carbonate in einer Menge im Bereich von 0 bis 1 Gew.-%, beispielsweise in einer Menge im Bereich von 0,01 bis 0,75 Gew.-%, weiter bevorzugt in einer Menge im Bereich von 0,01 bis 0,5 Gew.-%. Erfindungsgemäß ist es auch möglich, dass die Polyolzusammensetzung frei ist von organischen Carbonaten, beispielsweise frei von Alkylencarbonaten.

Die Polyolzusammensetzung (PZ) enthält mindestens eine Verbindung mit mindestens zwei gegenüber Isocyanatgruppen reaktiven Wasserstoffatomen und mindestens eine Verbindung (I) wie oben definiert. Vorzugsweise ist die Verbindung (I) ausgewählt ist aus der Gruppe bestehend aus Dicarbonsäurediestern der allgemeinen Formel:

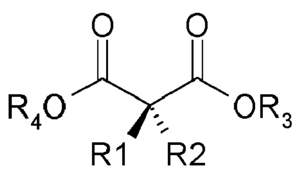

wobei R1 und R2 unabhängig voneinander für H oder einen Alkylrest mit 1 bis 6 C-Atomen stehen; und R3 und R4 unabhängig voneinander für einen Alkylrest mit 1 bis 18 C-Atomen stehen.

Weiter bevorzugt stehen die Reste R1 und R2 für H und die Reste R3 und R4 stehen unabhängig voneinander für einen Alkylrest mit 1 bis 6 C-Atomen, weiter bevorzugt für einen für einen Alkylrest mit 1 bis 2 C-Atomen. Besonders bevorzugt ist die Verbindung (I) ausgewählt aus Malonsäurediestern. Als besonders geeignet haben sich im Rahmen der vorliegenden Erfindung Malonsäurediester ausgewählt aus der Gruppe bestehend aus Malonsäuredimethylester, Malonsäurediethylester, Malonsäuredipropylester, Malonsäuredibutylester, Malonsäuredipentylester, Malonsäuredihexylester, Malonsäuremethyl-ethylester, Malonsäuremethyl-propylester, Malonsäuremethyl-butylester, Malonsäuremethyl-pentylester, Malonsäuremethyl-hexylester, Malonsäureethyl-propylester, Malonsäureethyl-butylester, Malonsäureethyl-pentylester, Malonsäureethyl-hexylester, Malonsäurepropyl-butylester, Malonsäurepropyl-pentylester, Malonsäurepropyl-hexylester, Malonsäurebutyl-pentylester, Malonsäurebutyl-hexylester und Malonsäurepentyl-hexylester,

insbesondere bevorzugt ausgewählt aus der Gruppe bestehend aus Malonsäuredimethylester, Malonsäurediethylester, Malonsäuredipropylester, Malonsäuredibutylester, Malonsäuredipentylester, Malonsäuredihexylester und Malonsäuremethyl-ethylester, erwiesen.

Demgemäß betrifft die vorliegende Erfindung gemäß einer weiteren Ausführungsform auch ein Verfahren zur Herstellung eines Polyurethan- oder Polyisocyanurat-Hartschaumstoffs, umfassend die Umsetzung von mindestens einem Polyisocyanat, und einer Polyolzusammensetzung (PZ), wobei die Verbindung (I) ausgewählt ist aus der Gruppe bestehend aus Dicarbonsäurediestern der allgemeinen Formel:

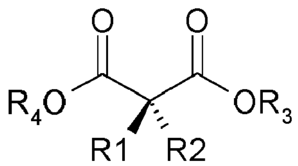

wobei R1 und R2 unabhängig voneinander für H oder einen Alkylrest mit 1 bis 6 C-Atomen stehen; und R3 und R4 unabhängig voneinander für einen Alkylrest mit 1 bis 18 C-Atomen stehen.

Demgemäß betrifft die vorliegende Erfindung gemäß einer weiteren Ausführungsform auch ein Verfahren zur Herstellung eines Polyurethan- oder Polyisocyanurat-Hartschaumstoffs, umfassend die Umsetzung von mindestens einem Polyisocyanat, und einer Polyolzusammensetzung (PZ), wobei die Verbindung (I) ausgewählt ist aus der Gruppe bestehend aus Malonsäurediestern.

Demgemäß betrifft die vorliegende Erfindung gemäß einer weiteren Ausführungsform auch ein Verfahren zur Herstellung eines Polyurethan- oder Polyisocyanurat-Hartschaumstoffs, umfassend die Umsetzung von mindestens einem Polyisocyanat, und einer Polyolzusammensetzung (PZ), wobei die Verbindung (I) ausgewählt ist aus der Gruppe bestehend aus Malonsäuredimethylester, Malonsäurediethylester, Malonsäuredipropylester, Malonsäuredibutylester, Malonsäuredipentylester, Malonsäuredihexylester, Malonsäuremethyl-ethylester, Malonsäuremethyl-propylester, Malonsäuremethyl-butylester, Malonsäuremethyl-pentylester, Malonsäuremethyl-hexylester, Malonsäureethyl-propylester, Malonsäureethyl-butylester, Malonsäureethyl-pentylester, Malonsäureethyl-hexylester, Malonsäurepropyl-butylester, Malonsäurepropyl-pentylester, Malonsäurepropyl-hexylester, Malonsäurebutyl-pentylester, Malonsäurebutyl-hexylester und Malonsäurepentyl-hexylester.

Dabei können im Rahmen der vorliegenden Erfindung auch Mischungen verschiedener Ester eingesetzt werden. Demgemäß kann die Polyolzusammensetzung (PZ) auch zwei oder mehr Verbindung ausgewählt aus der Gruppe bestehend aus Dicarbonsäurediestern von Dicarbonsäuren mit 2 bis 18 C-Atomen und Tricarbonsäuretriestern von Tricarbonsäuren mit 3 bis 18 C-Atomen enthalten.

Die Verbindung (I) kann in einer geeigneten Menge eingesetzt werden, wobei die eingesetzte Menge der Verbindung (I) üblicherweise im Bereich von 0,5 bis 10 Gew.-%, bezogen auf das Gewicht der Polyolzusammensetzung (PZ) liegt, bevorzugt im Bereich von 1,0 bis 7,5 Gew.-%, bezogen auf das Gewicht der Polyolzusammensetzung (PZ), weiter bevorzugt im Bereich von 1,5 bis 5,0 Gew.-%, bezogen auf das Gewicht der Polyolzusammensetzung (PZ).

Demgemäß betrifft die vorliegende Erfindung gemäß einer weiteren Ausführungsform auch ein Verfahren zur Herstellung eines Polyurethan- oder Polyisocyanurat-Hartschaumstoffs, umfassend die Umsetzung von mindestens einem Polyisocyanat, und einer Polyolzusammensetzung (PZ), wobei die Verbindung (I) in einer Menge im Bereich von 0,5 bis 10 Gew.-%, bezogen auf das Gewicht der Polyolzusammensetzung (PZ) eingesetzt wird.

Die Polyolzusammensetzung (PZ) kann auch weitere Verbindungen enthalten. Überraschenderweise hat sich gezeigt, dass gute Eigenschaften erhalten werden, wenn die Polyolzusammensetzung (PZ) neben der Verbindung (I) eine Fettsäure oder einen Ester einer Fettsäure wie beispielsweise Rizinusöl enthält. Dabei kann die Polyolzusammensetzung auch Mischungen verschiedener Fettsäuren oder Fettsäureester enthalten. Im Rahmen der vorliegenden Erfindung geeignet sind insbesondere aliphatische Fettsäuren mit mehr als 10, bevorzugt mehr als 12 C-Atomen oder Ester dieser Fettsäuren, beispielsweise Palmitinsäure, Stearinsäure, Ölsäure, Dodecansäure, Tetradecansäure, Erucasäure, Linolsäure, Linolensäure, Arachidonsäure oder Ricinolsäure.

Demgemäß betrifft die vorliegende Erfindung gemäß einer weiteren Ausführungsform auch ein Verfahren zur Herstellung eines Polyurethan- oder Polyisocyanurat-Hartschaumstoffs, umfassend die Umsetzung von mindestens einem Polyisocyanat, und einer Polyolzusammensetzung (PZ), wobei die Polyolzusammensetzung (PZ) mindestens eine Fettsäure oder einen Fettsäureester enthält. Gemäß einer bevorzugten Ausführungsform betrifft die vorliegende Erfindung ein Verfahren zur Herstellung eines Polyurethan- oder Polyisocyanurat-Hartschaumstoffs, umfassend die Umsetzung von mindestens einem Polyisocyanat, und einer Polyolzusammensetzung (PZ), wobei die Polyolzusammensetzung (PZ) Rizinusöl enthält.

Auch die Menge der eingesetzten Fettsäure oder des Fettsäureesters, insbesondere des eingesetzten Rizinusöls kann in weiten Bereichen variieren. Üblicherweise liegt die eingesetzte Menge Fettsäure bzw. Fettsäureester,

insbesondere die Menge des eingesetzten Rizinusöls im Bereich von 1 bis 20 Gew.-%, bezogen auf das Gewicht der Polyolzusammensetzung (PZ).

Das Rizinusöl kann auch chemisch modifiziert sein, insbesondere durch Anlagerung von Alkylenoxiden. Es ist jedoch bevorzugt, nicht modifiziertes Rizinusöl einzusetzen.

Im Rahmen der vorliegenden Erfindung wird vorzugsweise mindestens ein Treibmittel eingesetzt. Geeignete Treibmittel sind dem Fachmann bekannt.

Als Treibmittel wird im Rahmen der vorliegenden Erfindung vorzugsweise Wasser verwendet, das mit Isocyanatgruppen unter Abspaltung von Kohlendioxid reagiert. Dabei kann das Wasser als alleiniges Treibmittel eingesetzt werden. Es ist auch möglich, das Wasser im Gemisch mit anderen, insbesondere physikalischen Treibmitteln einzusetzen. Erfindungsgemäß ist es auch möglich, dass weitere chemische Treibmittel wie beispielsweise Ameisensäure eingesetzt werden.

In Kombination mit Wasser können insbesondere physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50°C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane oder auch halogenierte Alkene. Die Treibmittel werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan. Beispielhaft seien genannt Propan, n-Butan, iso und Cyclobutan , n-, iso-und Cyclopentan, Cyclohexan, Dimethylether, Methylethylether, Methylbutylether, Ameisensäuremethylester, Aceton, sowie Fluoralkane, wie Trifluormethan, Difluormethan, 1,3,3,3-Pentafluorpropen, 1,1,1,3,3-Pentafluorbutan, 1,1,1,3,3-Pentafluorpropan, 1,1,1,2-Tetrafluorethan, 1,1,1,2,3-Pentafluorpropen, 1,1,1,4,4,4-Hexafluorbuten, 1-Chlor-3,3,3-trifluorpropen, Difluorethan und Heptafluorpropan. Die genannten physikalischen Treibmittel können allein oder in beliebigen Kombinationen untereinander eingesetzt werden. Im Rahmen der vorliegenden Erfindung können cis- oder trans-Isomere oder auch Gemische verschiedener Isomere eingesetzt werden.

Sofern Wasser als alleiniges Treibmittel eingesetzt wird, wird es üblicherweise in einer Menge im Bereich von 1 bis 10 Gew.-%, bezogen auf das Gewicht der Polyolzusammensetzung (PZ), eingesetzt, beispielsweise in einer Menge im Bereich von 2,5 bis 7,5 Gew.-%, weiter bevorzugt in einer Menge im Bereich von 3,5 bis 6,5 Gew.-%, jeweils bezogen auf das Gewicht der Polyolzusammensetzung (PZ).

Demgemäß betrifft die vorliegende Erfindung gemäß einer weiteren Ausführungsform auch ein Verfahren zur Herstellung eines Polyurethan- oder Polyisocyanurat-Hartschaumstoffs, umfassend die Umsetzung von mindestens einem Polyisocyanat, und einer Polyolzusammensetzung (PZ), wobei als Treibmittel Wasser in einer Menge im Bereich von 0,1 bis 10 Gew.-%, bezogen auf das Gewicht der Polyolzusammensetzung (PZ), eingesetzt wird.

Sofern Wasser in Kombination mit einem weiteren Treibmittel eingesetzt wird, wird die eingesetzte Menge Wasser angepasst. Wenn Wasser in Kombination mit einem chemischen oder physikalischen Treibmittel eingesetzt wird, liegt die eingesetzte Menge Wasser üblicherweise im Bereich von 0,1 bis 5,0 Gew.-%, weiter bevorzugt in einer Menge im Bereich von 0,3 bis 4,0 Gew.-%, jeweils bezogen auf das Gewicht der Polyolzusammensetzung (PZ).

Die eingesetzte Menge des physikalischen Treibmittels kann in weiten Bereichen variieren.

Erfindungsgemäß wird mindestens ein Polyisocyanat eingesetzt. Prinzipiell können alle geeigneten Polyisocyanate eingesetzt werden. Insbesondere kommen als organische Polyisocyanate alle bekannten organischen Di- und Polyisocyanate in Betracht, vorzugsweise aromatische mehrwertige Isocyanate.

Im einzelnen seien beispielhaft genannt 2,4- und 2,6-Toluylen-diisocyanat (TDI) und die entsprechenden Isomerengemische, 4,4'-, 2,4'- und 2,2'-Diphenylmethandiisocyanat (MDI) und die entsprechenden Isomerengemische, Mischungen aus 4,4'- und 2,4'-Diphenylmethandiisocyanaten, Polyphenyl-polymethylen-polyisocyanate, Mischungen aus 4,4'-, 2,4'- und 2,2'-Diphenylmethan-diisocyanaten und Polyphenylpolymethylen-polyisocyanaten (Roh-MDI) und Mischungen aus Roh-MDI und Toluylendiisocyanaten. Die organischen Di- und Polyisocyanate können einzeln oder in Form von Mischungen eingesetzt werden. Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Uretdion-, Carbamat-, Isocyanurat-, Carbodiimid-, Allophanat- und/oder Urethangruppen enthaltende Di- und/oder Polyisocyanate. Die modifizierten Polyisocyanate können gegebenenfalls miteinander oder mit unmodifizierten organischen Polyisocyanaten wie z.B. 2,4'-, 4,4'-Diphenylmethandiisocyanat, Roh-MDI, 2,4- und/oder 2,6-Toluylen-diisocyanat gemischt werden.

Daneben können auch Umsetzungsprodukte von mehrwertigen Isocyanaten mit mehrwertigen Polyolen, sowie deren Mischungen mit anderen Di- und Polyisocyanaten Verwendung finden.

Besonders bewährt hat sich als organisches Polyisocyanat Roh-MDI, insbesondere mit einem NCO-Gehalt von 29 bis 33 Gew.-% und einer Viskosität bei 25°C im Bereich von 150 bis 1000 mPas.

Die Polyolzusammensetzung (PZ) enthält mindestens eine Verbindung mit mindestens zwei gegenüber Isocyanatgruppen reaktiven Wasserstoffatomen. Geeignete Verbindungen sind beispielsweise solche mit OH oder NH-Gruppen.

Als Verbindungen mit mindestens zwei gegenüber Isocyanatgruppen reaktiven Wasserstoffatomen kommen solche in Betracht, die mindestens zwei reaktive Gruppen, bevorzugt OH-Gruppen, enthalten, insbesondere Polyetheralkohole und/oder Polyesteralkohole mit OH-Zahlen im Bereich von 25 bis 800 mg KOH/g.

Die eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die eingesetzten Polyesteralkohole haben üblicherweise eine Funktionalität im Bereich von 1,5 bis 4.

Insbesondere kommen Polyetheralkohole, die nach bekannten Verfahren, beispielsweise durch anionische Polymerisation von Alkylenoxiden an H-funktionellen Startsubstanzen in Gegenwart von Katalysatoren, vorzugsweise Alkalihydroxiden oder Doppelmetallcyanidkatalysatoren (DMC-Katalysatoren), hergestellt werden, zum Einsatz.

Als Alkylenoxide werden zumeist Ethylenoxid oder Propylenoxid, aber auch Tetrahydrofuran, verschiedene Butylenoxide, Styroloxid, vorzugsweise reines 1,2-Propylenoxid, eingesetzt. Die Alkylenoxide können einzeln, alternierend nacheinander oder als Mischungen verwendet werden.

Als Startsubstanzen kommen insbesondere Verbindungen mit mindestens 2, vorzugsweise 2 bis 8 Hydroxylgruppen oder mit mindestens einer primären Aminogruppe im Molekül zum Einsatz. Als Startsubstanzen mit mindestens 2, vorzugsweise 2 bis 8 Hydroxylgruppen im Molekül werden vorzugsweise Trimethylolpropan, Glycerin, Pentaerythrit, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt.

Als Startsubstanzen mit mindestens einer primären Aminogruppe im Molekül werden vorzugsweise aromatische Di- und/oder Polyamine, beispielsweise Phenylendiamine, und 4,4'-, 2,4'- und 2,2'-Diamino-diphenylmethan sowie aliphatische Di- und Polyamine, wie Ethylendiamin, eingesetzt. Geeignet sind auch Ethanolamin oder auch Toluoldiamine.

Die Polyetheralkohole besitzen eine Funktionalität von vorzugsweise 2 bis 8 und Hydroxylzahlen von vorzugsweise 25 mg KOH/g bis 800 mg KOH/g und insbesondere 150 mg KOH/g bis 570 mg KOH/g.

Erfindungsgemäß kann die Polyolzusammensetzung (PZ) auch zwei oder mehr Verbindungen mit mindestens zwei gegenüber Isocyanatgruppen reaktiven Wasserstoffatomen enthalten.

In einer bevorzugten Ausführungsform des erfindungsgemäßen Verfahrens enthält die Polyolzusammensetzung (PZ) mindestens einen Polyetheralkohol (P1), der eine Hydroxylzahl im Bereich zwischen 350 und 600 und eine Funktionalität im Bereich zwischen 3,5 und 5,5 aufweist.

Der Polyetheralkohol (P1) wird vorzugsweise durch Anlagerung von Ethylenoxid und/oder Propylenoxid, vorzugsweise Propylenoxid, an H-Funktionelle Startsubstanzen hergestellt. Als Startsubstanzen werden vorzugsweise die oben aufgeführten Zucker, insbesondere Saccharose oder Sorbit, eingesetzt. Üblicherweise werden die Zucker in Gegenwart von sogenannten Co-Startern, zumeist bei Raumtemperatur flüssigen 2- oder 3-funktionellen Alkoholen, wie Glyzerin, Trimethylolpropan, Ethylenglykol, Propylenglykol, oder Wasser mit den Alkylenoxiden umgesetzt. Als Katalysatoren werden üblicherweise basische Verbindungen, vorzugsweise Kaliumhydroxid, oder Amine eingesetzt.

Der Polyetheralkohol (P1) wird vorzugsweise in einer Menge von 35-55 Gew.-%, bezogen auf das Gewicht der Komponente b), eingesetzt. In diesem Bereich wird eine besonders gute Haftung erzielt, weiterhin kann dabei die Sprödigkeit des Schaums verringert werden.

In einer weiteren bevorzugten Ausführungsform enthält die Komponente b) mindestens einen Polyetheralkohol (P2). Hierbei handelt es sich um einen 2- bis 3-funktionellen Polyetheralkohol mit einer Hydroxylzahl im Bereich zwischen 150 und 450 mg KOH/g, Als Startsubstanzen werden vorzugsweise Glyzerin und/oder Trimethylolpropan und als Alkylenoxid Ethylenoxid und/oder Propylenoxid, insbesondere Propylenoxid, eingesetzt. Die Komponente (P2) wird vorzugsweise in einer Menge von 18-35 Gew.-%, bezogen auf das Gewicht der Komponente b), eingesetzt. In einer bevorzugten Variante ist der Polyetheralkohol (P2) ein 3-funktioneller Polyetheralkohol mit einer Hydroxylzahl im Bereich zwischen 150 und 420 mg KOH/g.

In einer besonders bevorzugten Ausführungsform des erfindungsgemäßen Verfahrens werden als Komponente (P2) mindestens ein Polyetheralkohol (P2a) und mindestens ein Polyetheralkohol (P2b) eingesetzt.

Bei Polyetheralkohol (P2a) handelt es sich um einen dreifunktionellen, vorzugsweise mit Trimethylolpropan gestarteten Polyetheralkohol mit einer Hydroxylzahl im Bereich zwischen 150 und 200 mg KOH/g.

Bei Polyetheralkohol (P2b) handelt es sich um einen dreifunktionellen, vorzugsweise mit Glyzerin gestarteten Polyetheralkohol mit einer Hydroxylzahl im Bereich zwischen 350 und 420 mg KOH/g.

Durch den Einsatz der Polyetheralkohole (P2) kann die Phasenstabilität der Polyolkomponente verbessert werden.

Zu den Verbindungen mit mindestens zwei gegenüber Isocyanat reaktiven Wasserstoffatomen gehören auch

die gegebenenfalls mitverwendeten Kettenverlängerer und Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Polyolkomponente, eingesetzt.

Die Herstellung der Hartschaumstoffe wird üblicherweise in Anwesenheit von Treibmitteln, Katalysatoren und Zellstabilisatoren sowie, falls erforderlich weiteren Hilfs- und/oder Zusatzstoffen wie beispielsweise Flammschutzmitteln durchgeführt.

Als Katalysatoren werden insbesondere Verbindungen eingesetzt, welche die Reaktion der Isocyanatgruppen mit den mit Isocyanatgruppen reaktiven Gruppen stark beschleunigen. Solche Katalysatoren sind beispielsweise basische Amine, wie sekundäre aliphatische Amine, Imidazole, Amidine, Alkanolamine, Lewissäuren oder metallorganische Verbindungen, insbesondere solche auf Basis von Zinn oder Bismut. Auch Katalysatorsysteme, bestehend aus einer Mischung verschiedener Katalysatoren, können eingesetzt werden.

Als Isocyanurat-Katalysatoren werden üblicherweise Metallcarboxylate, insbesondere Kaliumformiat, Kaliumoctanoate oder Kaliumacetat und deren Lösungen, eingesetzt. Die Katalysatoren können, je nach Erfordernis, allein oder in beliebigen Mischungen untereinander eingesetzt werden.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Antioxidantien, Hydrolyseschutzmittel, Antistatika, fungistatisch und bakteriostatisch wirkende Mittel zum Einsatz.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7,"Polyurethane" Carl-Hanser-Verlag München, 1 . Auflage, 1966, 2. Auflage, 1983 und 3. Auflage, 1993.

Zur Herstellung der Hartschaumstoffe auf Isocyanatbasis werden die Polyisocyanate und die Verbindungen mit mindestens zwei mit Isocyanatgruppen reaktiven Wasserstoffatomen in solchen Mengen zur Umsetzung gebracht, dass der Isocyanatindex im Falle der Polyurethan-Schaumstoffe in einem Bereich von 80 bis 500, insbesondere in einem Bereich von 90 bis 400, weiter bevorzugt in einem Bereich von 100 bis 350, besonders bevorzugt in einem Bereich von 105 bis 300, insbesondere bevorzugt in einem Bereich von 110 bis 200, liegt.

Als besonders vorteilhaft hat es sich erwiesen, nach dem Zweikomponenten-Verfahren zu arbeiten und die Verbindungen mit mindestens zwei mit Isocyanatgruppen reaktiven Wasserstoffatomen zusammen mit den Treibmitteln, Schaumstabilisatoren und Flammschutzmitteln sowie den Katalysatoren und Hilfs- und/oder Zusatzstoffen zu einer sogenannten Polyolkomponente zu vereinigen und diese mit den Polyisocyanaten oder den Mischungen aus den Polyisocyanaten und gegebenenfalls Treibmitteln, auch als Isocyanatkomponente bezeichnet, zur Umsetzung zu bringen.

Gemäß einem weiteren Aspekt betrifft die vorliegende Erfindung auch einen Polyurethan- oder Polyisocyanurat-Hartschaumstoff, erhältlich oder erhalten gemäß einem Verfahren wie zuvor beschrieben. Somit betrifft die vorliegende Erfindung auch einen Polyurethan- oder Polyisocyanurat-Hartschaumstoff, erhältlich oder erhalten gemäß einem Verfahren zur Herstellung eines Polyurethan- oder Polyisocyanurat-Hartschaumstoffs, umfassend die Umsetzung von

a) mindestens einem Polyisocyanat, und
b) einer Polyolzusammensetzung (PZ),

wobei die Polyolzusammensetzung (PZ) mindestens eine Verbindung mit mindestens zwei gegenüber Isocyanatgruppen reaktiven Wasserstoffatomen enthält und mindestens eine Verbindung (I) ausgewählt aus der Gruppe bestehend aus Dicarbonsäurediestern von Dicarbonsäuren mit 2 bis 18 C-Atomen und Tricarbonsäuretriestern von Tricarbonsäuren mit 3 bis 18 C-Atomen.

Weiter betrifft die vorliegende Erfindung auch eine Polyolzusammensetzung (PZ), mindestens enthaltend eine Verbindung mit mindestens zwei gegenüber Isocyanatgruppen reaktiven Wasserstoffatomen und mindestens eine Verbindung (I) ausgewählt aus der Gruppe bestehend aus Dicarbonsäurediestern von Dicarbonsäuren mit 2 bis 18 C-Atomen und Tricarbonsäuretriestern von Tricarbonsäuren mit 3 bis 18 C-Atomen.

Die vorliegende Erfindung betrifft auch die Verwendung einer Polyolzusammensetzung (PZ), mindestens enthaltend eine Verbindung mit mindestens zwei gegenüber Isocyanatgruppen reaktiven Wasserstoffatomen und mindestens eine Verbindung (I) ausgewählt aus der Gruppe bestehend aus Dicarbonsäurediestern von Dicarbonsäuren mit 2 bis 18 C-Atomen und Tricarbonsäuretriestern von Tricarbonsäuren mit 3 bis 18 C-Atomen zur Herstellung von Polyurethanoder Polyisocyanurat-Hartschaumstoffen.

Weiter betrifft die vorliegende Erfindung auch Verwendung eines Polyurethan- oder Polyisocyanurat-Hartschaumstoffs wie zuvor beschrieben als oder zur Herstellung von Isoliermaterialien, vorzugsweise Dämmplatten, Sandwichelementen, Warmwasserspeichern, Boilern, Kühlapparaturen, Isolierschäumen, Kühlgeräten oder Gefriergeräten.

Die vorliegende Erfindung betrifft auch eine Dämmplatte, Sandwichelement, Warmwasserspeicher, Boiler, Kühlapparatur, Isolierschaum, Kühlgerät oder Gefriergerät, das als Isoliermaterial einen Polyurethan- oder Polyisocyanurat-Hartschaumstoff wie zuvor beschrieben aufweist.

Durch das erfindungsgemäße Verfahren wird eine gute Haftung der Polyurethan- bzw. Polyisocyanurat-Schaumstoffen erreicht, insbesondere von solchen, die ganz oder überwiegend mit Wasser getrieben sind. Weiterhin konnten gute mechanischen Eigenschaften der Schaumstoffe erhalten werden und die Lagerstabilität der Polyolkomponente verbessert werden.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst auch wenn diese Kombination nicht ausdrücklich erwähnt wird.

Im Folgenden sind beispielhafte Ausführungsformen der vorliegenden Erfindung aufgeführt, wobei diese die vorliegende Erfindung nicht einschränken. Insbesondere umfasst die vorliegende Erfindung auch solche Ausführungsformen, die sich aus den im Folgenden angegebenen Rückbezügen und damit Kombinationen ergeben.

1. Verfahren zur Herstellung eines Polyurethan- oder Polyisocyanurat-Hartschaumstoffs, umfassend die Umsetzung von

   a) mindestens einem Polyisocyanat, und
   b) einer Polyolzusammensetzung (PZ),

   wobei die Polyolzusammensetzung (PZ) mindestens eine Verbindung mit mindestens zwei gegenüber Isocyanatgruppen reaktiven Wasserstoffatomen enthält und mindestens eine Verbindung (I) ausgewählt aus der Gruppe bestehend aus Dicarbonsäurediestern von Dicarbonsäuren mit 2 bis 18 C-Atomen und Tricarbonsäuretriestern von Tricarbonsäuren mit 3 bis 18 C-Atomen, und
   wobei bei der Umsetzung mindestens ein Treibmittel eingesetzt wird.

2. Verfahren nach Ausführungsform 1, wobei die Polyolzusammensetzung (PZ) das mindestens eine Treibmittel enthält.

3. Verfahren nach Ausführungsform 1 oder 2, wobei die Verbindung (I) ausgewählt ist aus der Gruppe bestehend aus Dicarbonsäurediestern der allgemeinen Formel:

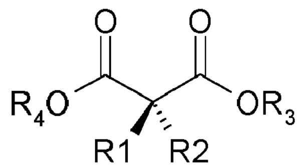

wobei R1 und R2 unabhängig voneinander für H oder einen Alkylrest mit 1 bis 6 C-Atomen stehen; und
R3 und R4 unabhängig voneinander für einen Alkylrest mit 1 bis 18 C-Atomen stehen.

4. Verfahren nach einer der Ausführungsformen 1 bis 3, wobei die Verbindung (I) ausgewählt ist aus der Gruppe bestehend aus Malonsäurediestern.

5. Verfahren nach einer der Ausführungsformen 1 bis 4, wobei die Verbindung (I) ausgewählt ist aus der Gruppe bestehend aus Malonsäuredimethylester, Malonsäurediethylester, Malonsäuredipropylester, Malonsäuredibutylester, Malonsäuredipentylester, Malonsäuredihexylester, Malonsäuremethyl-ethylester, Malonsäuremethyl-propylester, Malonsäuremethyl-butylester, Malonsäuremethyl-pentylester, Malonsäuremethyl-hexylester, Malonsäureethyl-propylester, Malonsäureethyl-butylester, Malonsäureethyl-pentylester, Malonsäureethyl-hexylester, Malonsäurepropyl-butylester, Malonsäurepropyl-pentylester, Malonsäurepropyl-hexylester, Malonsäurebutyl-pentylester, Malonsäurebutyl-hexylester und Malonsäurepentyl-hexylester.

6. Verfahren nach einer der Ausführungsformen 1 bis 5, wobei die Verbindung (I) in einer Menge im Bereich von

0,5 bis 10 Gew.-%, bezogen auf das Gewicht der Polyolzusammensetzung (PZ) eingesetzt wird.

7. Verfahren nach einer der Ausführungsformen 1 bis 6, wobei die Polyolzusammensetzung (PZ) mindestens eine Fettsäure oder einen Fettsäureester oder Mischungen davon enthält.

8. Verfahren nach einer der Ausführungsformen 1 bis 6, wobei die Polyolzusammensetzung (PZ) Rizinusöl enthält.

9. Verfahren nach einer der Ausführungsformen 1 bis 8, wobei als Treibmittel Wasser in einer Menge im Bereich von 0,1 bis 10 Gew.-%, bezogen auf das Gewicht der Polyolzusammensetzung (PZ), eingesetzt wird.

10. Polyurethan- oder Polyisocyanurat-Hartschaumstoff, erhältlich oder erhalten gemäß einem Verfahren nach einer der Ausführungsformen 1 bis 9.

11. Polyolzusammensetzung (PZ), mindestens enthaltend eine Verbindung mit mindestens zwei gegenüber Isocyanatgruppen reaktiven Wasserstoffatomen und mindestens eine Verbindung (I) ausgewählt aus der Gruppe bestehend aus Dicarbonsäurediestern von Dicarbonsäuren mit 2 bis 18 C-Atomen und Tricarbonsäuretriestern von Tricarbonsäuren mit 3 bis 18 C-Atomen.

12. Verwendung einer Polyolzusammensetzung (PZ), mindestens enthaltend eine Verbindung mit mindestens zwei gegenüber Isocyanatgruppen reaktiven Wasserstoffatomen und mindestens eine Verbindung (I) ausgewählt aus der Gruppe bestehend aus Dicarbonsäurediestern von Dicarbonsäuren mit 2 bis 18 C-Atomen und Tricarbonsäuretriestern von Tricarbonsäuren mit 3 bis 18 C-Atomen zur Herstellung von Polyurethan- oder Polyisocyanurat-Hartschaumstoffen.

13. Verwendung eines Polyurethan- oder Polyisocyanurat-Hartschaumstoffs gemäß Ausführungsform 10 als oder zur Herstellung von Isoliermaterialien, vorzugsweise Dämmplatten, Sandwichelementen, Warmwasserspeichern, Boilern, Kühlapparaturen, Isolierschäumen, Kühlgeräten oder Gefriergeräten.

14. Dämmplatte, Sandwichelement, Warmwasserspeicher, Boiler, Kühlapparatur, Isolierschaum, Kühlgerät oder Gefriergerät, das als Isoliermaterial einen Polyurethan- oder Polyisocyanurat-Hartschaumstoff gemäß Ausführungsform 10 aufweist.

Die nachfolgenden Beispiele dienen der Veranschaulichung der Erfindung, sind aber in keiner Weise einschränkend hinsichtlich des Gegenstands der vorliegenden Erfindung.

BEISPIELE

1. Messmethoden:

1.1 Haftungsmessungen:

Die Messung der Haftung des Polyurethan-Schaumstoffes zu Metalloberflächen erfolgte mittels einer mit Aluminium-beschichteten Papier ausgelegten Kastenform der Dimension 200 × 200 × 80 $mm^3$ bei einer Formtemperatur von 35 °C, falls nicht anders angegeben. Der Schaum wird auf die mit Aluminium beschichtete Fläche aufgetragen. Nach Eintrag des Reaktionsgemisches wird die Form geschlossen und der Prüfkörper soweit nicht anders angegeben nach 7 min entformt. Die der Bodenseite der Form zugewandte Aluminium-beschichtete Seite des Prüfkörpers wird anschließend mit einem Messer in einem Abstand von 6 cm eingeritzt. Die Bestimmung der Haftung erfolgte soweit nicht anders angegeben 3 min nach Entformung, d.h. insgesamt nach 10 min, mit Hilfe einer Zugprüfmaschine, wobei das beschichtete Papier mit einer Zuggeschwindigkeit von 100 mm/min senkrecht zur Formkörperebene über eine Umlenkrolle abgezogen wird und die mittlere hierfür aufzuwendende Kraft gemessen wird.

1.2 Bestimmung der Phasenstabilität der Polyol-Komponente:

Die einzelnen Bestandteile der Polyolkomponente wurden zusammen mit dem Treibmittel intensiv vermischt und anschließend in einem Ultraschallbad von eingerührten Luftblasen befreit und in verschlossenen Reagenzgläsern bei Raumtemperatur aufbewahrt. Die Phasenstabilität ist die Zeitdauer, bei der die Mischung bei Raumtemperatur gelagert werden kann, ohne dass es zu einer optisch wahrnehmbaren Trübung bzw. Phasentrennung der Komponente kommt.

1.3 Bestimmung der Sprödigkeit der Hartschäume:

Die Sprödigkeit wird qualitativ durch Eindrücken der Schäume mit dem Daumen im Randbereich ermittelt. Spröde Schäume zeichnen sich durch eine irreversible Verformung des Schaumstoffes bei bereits geringer Deformation aus.

1.4 Bestimmung der Druckfestigkeit:

Die Druckfestigkeit wird bestimmt nach DIN 53421/DIN EN ISO 604.

1.5 Bestimmung der Dimensionsstabilität (Autoklav):

Einem Schaumquader werden 1 Tag nach der Herstellung 18 gleichmäßige über die gesamte Länge verteilte Proben entnommen. Die Prüfkörper haben die ungefähren Abmessungen $5 \times 5 \times 4$ $cm^3$. Das genaue Volumen wird durch Eintauchen in ein Wasserbad bestimmt. Die Körper werden anschließend trocken getupft und 10 Minuten bei 0,7 bar Überdruck in einem Autoklav gelagert. Von jedem Prüfkörper wird erneut das Volumen bestimmt und der Mittelwert über alle relativen Volumenabnahmen berechnet.

1.6 Untersuchungen zur Lagerstabilität:

Die Polyolkomponenten werden 6 Monate bei Raumtemperatur und/oder 45°C gelagert. Schaummuster sind direkt nach Abmischung der Polyolkomponente hergestellt und die Haftung bei 35°C oder 30°C Formtemperatur bestimmt worden. Nach einem halben Jahr wurden wieder Schaumproben gefertigt und geprüft.

2. Einsatzstoffe

Polyol 1: Polyetheralkohol auf Basis von Sorbitol und Propylenoxid mit einer OH-Zahl von 490 mg KOH/g, einer Viskosität von 23000 mPas bei 25°C und einer Funktionalität von 5.

Polyol 2: Polyetheralkohol auf Basis von Trimethylolpropan und Propylenoxid mit einer OH-Zahl von 160 mg KOH/g, einer Viskosität von 300 mPas bei 25°C und einer Funktionalität von 3.

Polyol 3:Polyetheralkohol auf Basis von Glyzerin, Ethylenoxid und Propylenoxid mit einer OH-Zahl von 160 mg KOH/g, einer Viskosität von 250 mPas bei 25°C und einer Funktionalität von 3.

Polyol 4: Polyetheralkohol auf Basis von Glyzerin und Propylenoxid mit einer OH-Zahl von 400 mg KOH/g, einer Viskosität von 400 mPas bei 25°C und einer Funktionalität von 3.

Polyol 5: Rizinusöl mit einer OH-Zahl von ca. 160 mg KOH/g und einer Viskosität von 1000 mPas bei 20°C und einer Funktionalität von ca. 2,5.

Polyol 6: Polyesteralkohol auf Basis Phthalsäureanhydrid, Ölsäure, Diethylenglykol und Monoethylenglykol mit einer OH-Zahl von 210 mg KOH/g, einer Viskosität von 2750 mPas bei 25°C und einer Funktionalität von 1,75.

Polyol 7: Polyesteralkohol auf Basis Phthalsäureanhydrid, Ölsäure, Diethylenglykol und einem Polyetheralkohol auf Basis von Trimethylolpropan und Ethylenoxid mit einer OH-Zahl von 610 mg KOH/g, einer Viskosität von 640 mPas bei 25°C und einer Funktionalität von 3,0. Der Polyesteralkohol weist eine OH-Zahl von 250 mg KOH/g, eine Viskosität von 1250 mPas bei 25°C und eine Funktionalität von 2,22 auf.

Polyol 8: Polyethylenglykol mit einer OH-Zahl von 188 mg KOH/g, einer Viskosität von 46 mPas bei 50°C und eine Funktionalität von 2.

Polyol 9: Polyesteralkohol auf Basis Phthalsäure, Diethylenglykol und Monoethylenglykol mit einer OH-Zahl von 240 mg KOH/g, einer Viskosität von 7500 mPas bei 25°C und einer Funktionalität von 2.

Flammschutzmittel: Tris-(2-Chlorisopropyl)phosphat mit einem Phosphorgehalt von 9,5% und einer Viskosität von

71 mPas bei 25°C.

Stabilisator 1: Tegostab B 8467® (Evonik)

Stabilisator 2: Niax Silicone® L 6900 (Momentive Performance Materials)

Amin-Katalysator 1: Dimethylcyclohexylamin

Amin-Katalysator 2: Lupragen® N 600 (BASF SE)

Treibmittel: Ameisensäure, 85%

Katalysator 1: Kaliumformiat, 40% / Monoethylenglykol

Katalysator 2: Bis-(2-dimethylaminoethyl)ether, 20% / Dipropylenglykol

Katalysator 3: N-Methyl-bis-2-dimethylaminoethylamin, 26% / Polyethylenglykol mit einer OH-Zahl von 250 mg KOH/g

Isocyanat 1: Lupranat® M20 der BASF SE, polymeres MDI mit einem NCO-Gehalt = 31,8 % und einer Viskosität von 210 mPas bei 25°C

Isocyanat 2: Lupranat® M50 der BASF SE, polymeres MDI mit einem NCO-Gehalt = 31,5 % und einer Viskosität von 550 mPas bei 25°C

3. Allgemeine Versuchsbeschreibungen

3.1 Allgemeine Herstellvorschrift (handverschäumte Proben)

Die Polyolkomponenten werden mit der angegebenen Menge an Isocyanat-Komponente mit einem Laborrührer (Vollrath-Rührer) mit einer Rührgeschwindigkeit von 1400 Umdrehungen pro Minute und einer Rührzeit von 10 Sekunden in einem Becher intensiv vermischt und in diesem zur Verschäumung gebracht. Bei diesem sogenannten Bechertest werden die Start-, Abbinde- und Steigzeit, die Rohdichte sowie ggf. die Sprödigkeit bestimmt.

3.2 Allgemeine Versuchsbeschreibung (Maschinenversuche)

Aus den angegebenen Rohstoffen wird eine Polyolkomponente hergestellt. Mittels eines Hochdruck-Puromaten PU 30/80 IQ (Elastogran GmbH) mit einer Austragsmenge von 250 g/s wird die Polyolkomponente mit der jeweils angegebenen Menge des angegebenen Isocyanats vermischt. Die Reaktionsmischung wird in temperierte Formwerkzeuge der Abmessungen

$$2000 \times 200 \times 50\ mm^3\ (Lanze)$$

eingetragen und dort zum Aufschäumen belassen. Die Form wird zuvor mit Papier, das auf einer Seite mit Aluminium beschichtet ist, ausgelegt. Der Schaum wird auf die mit Aluminium beschichtete Fläche aufgetragen und die Form dann geschlossen.
Falls nicht anders angegeben, wird die Form auf 45°C temperiert und der Schaumkörper nach definierter Zeit entformt. Die Überfüllung beträgt, falls nicht anders angegeben, 14,5%. Vor allen folgenden Messungen mit Ausnahme der Haftungsmessung wird das beschichtete Papier entfernt.

(a) Bestimmung von Start- und Abbindezeit sowie freie Kernrohdichte:

In einem PE-Sack (Durchmesser ca. 30 cm) werden ca. 1000 g der Reaktionsmischung eingeschossen. Die Startzeit ist definiert als Zeitspanne zwischen Schussbeginn und Beginn der Volumenexpansion des Reaktionsgemisches. Die Abbindezeit ist die Zeitspanne zwischen Schussbeginn und dem Moment, ab der sich mittels eines Schaumstreifens Fäden aus dem Reaktionsgemisch ziehen lassen. Aus der Mitte der gleichen Probe werden zur Bestimmung der frei geschäumten Kernrohdichte nach Aushärtung (24 h später) des Schaumstoffes fünf ca. $60 \times 60 \times 60\ mm^3$

große Proben geschnitten. Sie werden gewogen und durch Eintauchen in ein Wasserbad wird ihr Volumen bestimmt. Aus diesen Größen wird die freie Kernrohdichte berechnet und der Mittelwert der Proben angegeben.

(b) Bestimmung der Mindestfülldichte:

Als Mindestfülldichte wird die Rohdichte bezeichnet, bei der die Lanzenform gerade gefüllt ist. Zu deren Messung wird in der Lanzenform ein Schaumkörper hergestellt, der die Form zu 90% bis 95% ausfüllt und auf 100% Ausfüllung extrapoliert. Der Quotient aus Mindestfülldichte und freier Kernrohdichte wird als Fließfaktor bezeichnet.

4. Beispiele

4.1 Gemäß der allgemeinen Herstellvorschrift unter Ziffer 3.1 wurden die in Tabelle 1a und 1b aufgeführten Polyolkomponenten mit Isocyanat 1 umgesetzt (Isocyanat-Index 118).

Die Eigenschaften der erhaltenen Hartschaumstoffe sind in Tabelle 2a zusammengefasst. Bei der Bestimmung der Haftung betrug die Entformzeit 7 Minuten. Die Messung der Haftung erfolgte nach weiteren 3 Minuten, d.h. nach insgesamt 10 Minuten.

Tabelle 1a: Zusammensetzung der Polyolkomponente

| | Beispiel | | | | | |
|---|---|---|---|---|---|---|
| Verbindung | 1 (V) | 2 | 3 | 4 | 5 | 6 |
| Polyol 1 | 36,900 | 36,900 | 36,900 | 36,900 | 36,900 | 36,900 |
| Polyol 2 | 36,050 | 36,050 | 36,050 | 36,050 | 36,050 | 36,050 |
| Polyol 4 | 3,000 | 3,000 | 3,000 | 3,000 | 3,000 | 3,000 |
| N, N-Dimethylbenzylamin | 2,500 | 2,500 | 2,500 | 2,500 | 2,500 | 2,500 |
| Propylencarbonat | 2,000 | 2,000 | | | | |
| Stabilisator 2 | 2,000 | 2,000 | 2,000 | 2,000 | 2,000 | 2,000 |
| Polyol 5 | 12,000 | 12,000 | 12,000 | 12,000 | 12,000 | 12,000 |
| Amin Kat 2 | 0,400 | 0,400 | 0,400 | 0,400 | 0,400 | 0,400 |
| Amin Kat 1 | 0,800 | 0,800 | 0,800 | 0,800 | 0,800 | 0,800 |
| Wasser | 4,350 | 4,350 | 4,350 | 4,350 | 4,350 | 4,350 |
| Ethylacetoacetat | | 2,000 | | | | |
| Diethylmalonat | | | 2,000 | | | |
| Isopropylmyristat | | | | 2,000 | | |
| Methylacetoacetat | | | | | 2,000 | |
| Ethylcinnamat | | | | | | 2,000 |

Tabelle 1b: Zusammensetzung der Polyolkomponente

| | Beispiel | | | | |
|---|---|---|---|---|---|
| Verbindung | 7 | 8 | 9 | 10 | 11 |
| Polyol 1 | 36,900 | 36,900 | 36,900 | 36,900 | 36,900 |
| Polyol 2 | 36,050 | 36,050 | 36,050 | 36,050 | 36,050 |
| Polyol 4 | 3,000 | 3,000 | 3,000 | 3,000 | 3,000 |
| N, N-Dimethylbenzylamin | 2,500 | 2,500 | 2,500 | 2,500 | 2,500 |
| Propylencarbonat | | | | | |

(fortgesetzt)

| | Beispiel | | | | |
|---|---|---|---|---|---|
| Stabilisator 2 | 2,000 | 2,000 | 2,000 | 2,000 | 2,000 |
| Polyol 5 | 12,000 | 12,000 | 12,000 | 12,000 | 12,000 |
| Amin Kat 2 | 0,400 | 0,400 | 0,400 | 0,400 | 0,400 |
| Amin Kat 1 | 0,800 | 0,800 | 0,800 | 0,800 | 0,800 |
| Wasser | 4,350 | 4,350 | 4,350 | 4,350 | 4,350 |
| Diethylenglykol | 2,000 | | | | |
| Monoethylenglykol | | 2,000 | | | |
| Ölsäure | | | 2,000 | | |
| Decanol | | | | 2,000 | |
| Octanol | | | | | 2,000 |

Tabelle 2a

| Beispiel | Haftung, 35°C [N] | Homogenität nach 90Tagen |
|---|---|---|
| 1 | 9,58 | i.O. |
| 2 | 10,22 | i.O. |
| 3 | 7,73 | i.O. |
| 4 | 6,86 | i.O. |
| 5 | 6,43 | i.O. |
| 6 | 7,94 | i.O. |
| 7 | 10,10 | i.O. |
| 8 | 4,48 | i.O. |
| 9 | 6,55 | i.O. |
| 10 | 3,39 | i.O. |
| 11 | 5,13 | i.O. |

Für Beispiele1, 2, 3, 6 und 7 wurde die Lagerstabilität untersucht. Die Ergebnisse sind in Tabelle 2b zusammengefasst. In jedem Fall betrug bei der Bestimmung der Haftung die Entformzeit 7 Minuten. Die Messung der Haftung erfolgte nach weiteren 3 Minuten, d.h. nach insgesamt 10 Minuten.

Tabelle 2b

| | Beispiel | | | | |
|---|---|---|---|---|---|
| | 1 (V) | 2 | 3 | 6 | 7 |
| Haftung, 35°C, [N] | 9,6 | 10,2 | 7,7 | 7,9 | 10,1 |
| Haftung, 30°C, [N] | 6,6 | 0,5 | | | 0,5 |
| Haftung, 25°C, [N] | 0,9 | | | | |
| Nach 6 Monaten Lagerung bei RT, Haftung, 35°C, [N] | 9,8 | 10,9 | 11,3 | 11,8 | 1,7 |
| Nach 6 Monaten Lagerung bei 45°C, Haftung, 35°C, [N] | 5,4 | 1,7 | 11,3 | 10,3 | 2,1 |
| Nach 6 Monaten Lagerung bei RT, Haftung, 30°C, [N] | 2,2 | 1,1 | 3,7 | | |
| Nach 6 Monaten Lagerung bei 45°C, Haftung, 30°C, [N] | 1,3 | | 1,9 | 2,6 | 0,9 |

(fortgesetzt)

| | Beispiel | | | | |
|---|---|---|---|---|---|
| | 1 (V) | 2 | 3 | 6 | 7 |
| Nach 6 Monaten Lagerung bei RT, Haftung, 25°C, [N] | | | 1,0 | | |
| Nach 6 Monaten Lagerung bei 45°C, Haftung, 25°C, [N] | | | | 1,5 | |

4.2 Im Maschinenversuch wurden gemäß der allgemeinen Versuchsbeschreibung die in Tabelle 3 aufgeführten Polyolkomponenten mit Isocyanat 1 umgesetzt (Isocyanat-Index 118, Überfüllung 14,5%).

Die Eigenschaften der erhaltenen Hartschaumstoffe sind in Tabelle 4 zusammengefasst. In jedem Fall betrug bei der Bestimmung der Haftung die Entformzeit 7 Minuten. Die Messung der Haftung erfolgte nach weiteren 3 Minuten, d.h. nach insgesamt 10 Minuten.

Tabelle 3: Zusammensetzung der Polyolkomponente

| | Beispiel | | |
|---|---|---|---|
| Verbindung | 12 (V) | 13 | 14 |
| Polyol 1 | 36,900 | 36,900 | 36,900 |
| Polyol 2 | 36,050 | 36,050 | 36,050 |
| Polyol 4 | 3,000 | 3,000 | 3,000 |
| N, N-Dimethylbenzylamin | 2,500 | 2,500 | 2,500 |
| Propylencarbonat | 2,000 | | |
| Stabilisator 2 | 2,000 | 2,000 | 2,000 |
| Polyol 5 | 12,000 | 12,000 | 12,000 |
| Amin Kat 2 | 0,400 | 0,400 | 0,400 |
| Amin Kat 1 | 0,800 | 0,800 | 0,800 |
| Wasser | 4,350 | 4,350 | 4,350 |
| Diethylmalonat | | 2,000 | |
| Ethylcinnamat | | | 2,000 |

Tabelle 4: Maschinenversuch

| | | Beispiel | | |
|---|---|---|---|---|
| | | 12 (V) | 13 | 14 |
| Startzeit [s] | | 8 | 8 | 8 |
| Gelzeit [s] | | 45 | 49 | 44 |
| Freigeschäumte Rohdichte [g/l] | | 24,9 | 24,4 | 24,0 |
| Gesamt-Rohdichte Form [g/l] | | 33,9 | 32,5 | 32,3 |
| Fließ faktor | | 1,36 | 1,33 | 1,35 |
| Haftung [N] | | | | |
| | 30°C | 1,85 | 1,12 | 1,18 |
| | 35°C | 7,87 | 6,27 | 6,07 |
| | 40°C | 10,74 | 8,45 | 7,69 |

(fortgesetzt)

| | | Beispiel | | |
|---|---|---|---|---|
| | 45°C | 12,18 | 10,63 | 8,30 |
| Druckfestigkeit [N/mm$^2$] | | 0,183 | 0,177 | 0,153 |
| Dimensionsstabilität [Vol%] | | -1,01 | -0,58 | -1,50 |

4.3 Im Maschinenversuch wurde die in Tabelle 5 aufgeführten Polyolkomponenten mit Isocyanat 1 umgesetzt (Isocyanat-Index 114, Überfüllung 14,5%).

Die Eigenschaften der erhaltenen Hartschaumstoffe sind in Tabelle 6 zusammengefasst.

Tabelle 5. Zusammensetzung der Polyolkomponente

| Verbindung | Beispiel 15 |
|---|---|
| Polyol 1 | 36,200 |
| Polyol 3 | 35,850 |
| Polyol 4 | 3,000 |
| N, N-Dimethylbenzylamin | 1,500 |
| | |
| Stabilisator 2 | 3,000 |
| Polyol 5 | 12,000 |
| Amin Kat 2 | 0,250 |
| Amin Kat 1 | 0,400 |
| Wasser | 4,800 |
| Diethylmalonat | 3,000 |

Tabelle 6: Maschinenversuch

| | Beispiel 15 |
|---|---|
| Startzeit [s] | 16 |
| Gelzeit [s] | 80 |
| Freigeschäumte Rohdichte [g/l] | 25,4 |
| Gesamt-Rohdichte Form [g/l] | 39,04 |
| Druckfestigkeit [N/mm$^2$] | 0,168 |
| Dimensionsstabbilität [Vol%] | -0,73 |

4.4 Gemäß der allgemeinen Herstellvorschrift unter Ziffer 3.1 wurden die in Tabelle 7 aufgeführten Polyolkomponenten mit Isocyanat 2 umgesetzt.

Die Eigenschaften der erhaltenen Hartschaumstoffe sind in Tabelle 8 zusammengefasst. In jedem Fall betrug bei der Bestimmung der Haftung die Entformzeit 21 Minuten. Die Messung der Haftung erfolgte nach weiteren 3 Minuten, d.h. nach insgesamt 24 Minuten.

Tabelle 7: Zusammensetzung der Polyolkomponente

| | Beispiel | | | |
|---|---|---|---|---|
| Verbindung | 16 (V) | 17 | 18 (V) | 19 |

(fortgesetzt)

| | Beispiel | | | |
|---|---|---|---|---|
| Polyol 6 | 48,400 | 48,400 | | |
| Flammschutzmittel | 25,000 | 25,000 | 12,000 | 12,000 |
| Polyol 7 | 15,000 | 15,000 | | |
| Polyol 8 | 8,000 | 8,000 | 8,000 | 8,000 |
| Stabilisator 1 | 2,000 | 2,000 | 2,000 | 2,000 |
| Ameisensäure 85% | 1,600 | 1,600 | 1,200 | 1,200 |
| Diethylmalonat | | 1,000 | | 3,000 |
| Polyol 9 | | | 76,400 | 76,400 |
| Katalysator 1 | 1,400 | 1,400 | 1,200 | 1,200 |
| Katalysator 2 | 2,400 | 2,400 | | |
| Katalysator 3 | | | 3,300 | 3,300 |
| Gemisch n-Pentan/iso-Pentan 80/20 | 8,000 | 8,000 | 13,500 | 13,500 |
| | | | | |
| Index | 289 | 292 | 333 | 341 |

Tabelle 8

| | Beispiel | | | |
|---|---|---|---|---|
| | 16 (V) | 17 | 18 (V) | 19 |
| Startzeit [s] | 14 | 14 | 12 | 13 |
| Abbindezeit [s] | 51 | 59 | 48 | 58 |
| Steigzeit [s] | 76 | 78 | 78 | 80 |
| | | | | |
| Haftung 35°C, 21/24 min | 2,22 | 2,73 | 6,21 | 13,32 |

4.5 Gemäß der allgemeinen Herstellvorschrift unter Ziffer 3.1 wurden die in Tabelle 9 aufgeführten Polyolkomponenten mit Isocyanat 1 umgesetzt.

Die Eigenschaften der erhaltenen Hartschaumstoffe sind in Tabelle 10 zusammengefasst. Bei der Bestimmung der Haftung betrug die Entformzeit 7 Minuten. Die Messung der Haftung erfolgte nach weiteren 3 Minuten, d.h. nach insgesamt 10 Minuten.

Tabelle 9: Zusammensetzung der Polyolkomponente

| | Beispiel | | | | | | | |
|---|---|---|---|---|---|---|---|---|
| Verbindung | 20 | 21 | 22 | 23 | 24 | 25 | 26 | 27 |
| Polyol 1 | 35,800 | 35,800 | 35,800 | 35,800 | 35,800 | 35,800 | 35,800 | 35,800 |
| Polyol 3 | 35,500 | 38,500 | 37,500 | 33,500 | 30,500 | 35,500 | 35,500 | 35,500 |
| Polyol 4 | 3,000 | 3,000 | 3,000 | 3,000 | 3,000 | 3,000 | 3,000 | 3,000 |
| N, N-Dimethylbenzylamin | 1,500 | 1,500 | 1,500 | 1,500 | 1,500 | 1,500 | 1,500 | 1,500 |
| | | | | | | | | |
| Stabilisator 2 | 3,000 | 3,000 | 3,000 | 3,000 | 3,000 | 3,000 | 3,000 | 3,000 |

(fortgesetzt)

| | Beispiel | | | | | | | |
|---|---|---|---|---|---|---|---|---|
| Polyol 5 | 12,000 | 12,000 | 12,000 | 12,000 | 12,000 | 12,000 | 12,000 | 12,000 |
| Amin Kat 2 | 0,500 | 0,500 | 0,500 | 0,500 | 0,500 | 0,500 | 0,500 | 0,500 |
| Amin Kat 1 | 0,900 | 0,900 | 0,900 | 0,900 | 0,900 | 0,900 | 0,900 | 0,900 |
| Wasser | 4,800 | 4,800 | 4,800 | 4,800 | 4,800 | 4,800 | 4,800 | 4,800 |
| Diethylmalonat | 3,000 | | 1,000 | 5,000 | 8,000 | | | |
| Malonsäure | | | | | | 3,000 | | |
| Acetylaceton | | | | | | | 3,000 | |
| Fe (III) acetylacetonat | | | | | | | | 3,000 |
| | | | | | | | | |
| Index | 115 | 114 | 114 | 115 | 116 | 115 | 115 | 114 |

Tabelle 10

| | Beispiel | | | | | | | |
|---|---|---|---|---|---|---|---|---|
| | 20 | 21 | 22 | 23 | 24 | 25 | 26 | 27 |
| Startzeit [s] | 15 | 15 | 15 | 15 | 14 | 21 | 16 | 14 |
| Abbindezeit [s] | 63 | 62 | 61 | 63 | 64 | 120 | 73 | 43 |
| Steigzeit [s] | 98 | 95 | 96 | 98 | 103 | 170 | 108 | 64 |
| | | | | | | | | |
| Rohdichte [g/l] | 28,4 | 28,3 | 28,4 | 27,9 | 28,0 | 27,1 | 28,2 | 28,5 |
| | | | | | | | | |
| Haftung [N], 35°C, 7/10 min | 9,26 | 5,76 | 5,52 | 9,42 | 9,62 | | 0,51 | 1,39 |
| Phasenstabilität der Polyolkomponente (Homogenität) | homogen | homogen | homogen | homogen | homoge n | Niederschlag | homogen | Niederschlag |

5. Schrumpfverhalten (Dimensionsstabilität bei Raumtemperatur (20°C) über eine definierte Zeit

Bei der Schrumpfüberprüfung eines Schaumkörpers handelt es sich um eine rein visuelle Beurteilung. Die geschäumten Muster werden mit einem Vergleichssystem (Muster S-1 entspricht dem Original) verglichen. Alle Muster, auch das Vergleichsmuster S-1, werden am selben Tag hergestellt, damit die Vergleichbarkeit gewahrt bleibt. Über einen Zeitraum von 4 Wochen werden die Proben alle 2-3 Tage visuell betrachtet. Notiert wird, ob die Muster im Vergleich zum Original mehr, weniger oder gleich oder überhaupt nicht schrumpfen.

Tabelle 11: Tests zum Schrumpfverhalten

| Beispiel | | S-1 | S-2 | S-3 | S-4 | S-5 | S-6 | S-7 | S-8 | S-9 |
|---|---|---|---|---|---|---|---|---|---|---|
| | | | | | | | | | | |
| Polyol 1 | | 36,20 | | | | | | | | |
| Polyol 3 | | 35,85 | | | | | | | | |
| Polyol 4 | | 3,000 | | | | | | | | |
| N, N-Dimethylbenzylamin | | 1,500 | | | | | | | | |
| Stabilisator 2 | | 3,000 | | | | | | | | |
| Polyol 5 | | 12,00 | | | | | | | | |
| Amin Kat 2 | | 0,250 | | | | | | | | |
| Amin Kat 1 | | 0,400 | | | | | | | | |
| Wasser | | 4,800 | | | | | | | | |
| Diethylmalonat | % | 3,0 | | | | | | | | |
| Dimethyladipat | % | | 3,0 | | | 1,0 | 0,6 | 0,7 | | 0,6 |
| Dimethylglutarat | % | | | 3,0 | | 1,0 | 1,8 | 2,3 | 2,0 | 2,0 |
| Dimethylsuccinat | % | | | | 3,0 | 1,0 | 0,6 | | 1,0 | 0,4 |
| | | | | | | | | | | |
| Startzeit | s | 27 | 28 | 29 | 28 | 28 | 27 | 26 | 28 | 30 |
| Abbindezeit | s | 148 | 141 | 143 | 140 | 140 | 137 | 137 | 142 | 145 |
| Rohdichte | g/l | 31,2 | 31,2 | 31,3 | 30,7 | 30,5 | 30,4 | 30,3 | 30,9 | 30,9 |
| | | | | | | | | | | |
| Haftung, 30°C, 7/10min | N | 0,60 | 1,49 | 0,47 | 0,80 | 0,48 | 0,45 | 0,48 | 0,47 | 0,50 |
| | | | | | | | | | | |
| Schrumpf im Vgl. zum Original | | = | > | = | > | > | > | = | | |
| Phasenstabilität der Polyolkomponente | | homogen | homogen | homogen | homogen | homogen | homogen | homogen | homogen | homogen |

**Patentansprüche**

1. Polyolzusammensetzung (PZ) zur Herstellung von Polyurethan- oder Polyisocyanurat-Hartschaumstoffen, mindestens enthaltend eine Verbindung mit mindestens zwei gegenüber Isocyanatgruppen reaktiven Wasserstoffatomen und mindestens eine Verbindung (I) ausgewählt aus der Gruppe bestehend aus Dicarbonsäurediestern der allgemeinen Formel:

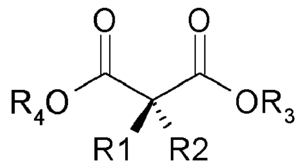

wobei R1 und R2 unabhängig voneinander für H oder einen Alkylrest mit 1 bis 6 C-Atomen stehen; und

R3 und R4 unabhängig voneinander für einen Alkylrest mit 1 bis 18 C-Atomen stehen,
wobei die Polyolzusammensetzung (PZ) mindestens ein Treibmittel enthält, und wobei als Treibmittel Wasser oder Wasser im Gemisch mit einem weiteren physikalischen oder chemischen Treibmittel eingesetzt wird,
wobei das weitere Treibmittel ausgewählt ist aus der Gruppe, bestehend aus Propan, n-Butan, iso und Cyclobutan , n-, iso-und Cyclopentan, Cyclohexan, Dimethylether, Methylethylether, Methylbutylether, Ameisensäuremethylester, Aceton, 1,3,3,3-Tetrafluorpropen, 1,1,1,2,3-Pentafluorpropen, 1,1,1,4,4,4-Hexafluorbuten und 1-Chlor-3,3,3-trifluorpropen,
wobei die Polyolzusammensetzung Wasser, sofern es als alleiniges Treibmittel eingesetzt wird, in einer Menge im Bereich von 1 bis 10 Gew.-%, bezogen auf das Gewicht der Polyolzusammensetzung (PZ), enthält, oder Wasser, sofern es in Kombination mit einem weiteren Treibmittel eingesetzt wird, in einer Menge im Bereich von 0,1 bis 5,0 Gew.-%, bezogen auf das Gewicht der Polyolzusammensetzung (PZ), enthält.

2. Polyolzusammensetzung gemäß Anspruch 1, wobei die Polyolzusammensetzung Wasser, sofern es als alleiniges Treibmittel eingesetzt wird, in einer Menge im Bereich von 3,5 bis 10 Gew.-%, bezogen auf das Gewicht der Polyolzusammensetzung (PZ), enthält, oder Wasser, sofern es in Kombination mit einem weiteren Treibmittel eingesetzt wird, in einer Menge im Bereich von 0,1 bis 5,0 Gew.-%, bezogen auf das Gewicht der Polyolzusammensetzung (PZ), enthält.

3. Polyolzusammensetzung nach einem der Ansprüche 1 oder 2, wobei die Verbindung (I) ausgewählt ist aus der Gruppe bestehend aus Malonsäurediestern.

4. Polyolzusammensetzung nach einem der Ansprüche 1 bis 3, wobei die Verbindung (I) ausgewählt ist aus der Gruppe bestehend aus Malonsäuredimethylester, Malonsäurediethylester, Malonsäuredipropylester, Malonsäuredibutylester, Malonsäuredipentylester, Malonsäuredihexylester, Malonsäuremethyl-ethylester, Malonsäuremethyl-propylester, Malonsäuremethyl-butylester, Malonsäuremethyl-pentylester, Malonsäuremethyl-hexylester, Malonsäureethyl-propylester, Malonsäureethyl-butylester, Malonsäureethyl-pentylester, Malonsäureethyl-hexylester, Malonsäurepropyl-butylester, Malonsäurepropyl-pentylester, Malonsäurepropyl-hexylester, Malonsäurebutyl-pentylester, Malonsäurebutyl-hexylester und Malonsäurepentyl-hexylester.

5. Polyolzusammensetzung nach einem der Ansprüche 1 bis 4, wobei die Verbindung (I) in einer Menge im Bereich von 0,5 bis 10 Gew.-%, bezogen auf das Gewicht der Polyolzusammensetzung (PZ) eingesetzt wird.

6. Polyolzusammensetzung nach einem der Ansprüche 1 bis 5, wobei die Polyolzusammensetzung (PZ) mindestens eine Fettsäure oder einen Fettsäureester oder Mischungen davon enthält.

7. Polyolzusammensetzung nach einem der Ansprüche 1 bis 6, wobei die Polyolzusammensetzung (PZ) Rizinusöl enthält.

8. Verwendung einer Polyolzusammensetzung (PZ) zur Herstellung von Polyurethan- oder Polyisocyanurat-Hartschaumstoffen, mindestens enthaltend eine Verbindung mit mindestens zwei gegenüber Isocyanatgruppen reaktiven Wasserstoffatomen und mindestens eine Verbindung (I) ausgewählt aus der Gruppe bestehend aus Dicarbonsäurediestern der allgemeinen Formel:

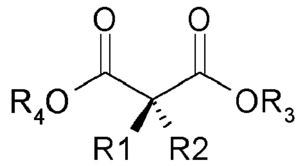

wobei R1 und R2 unabhängig voneinander für H oder einen Alkylrest mit 1 bis 6 C-Atomen stehen; und

R3 und R4 unabhängig voneinander für einen Alkylrest mit 1 bis 18 C-Atomen stehen,
wobei die Polyolzusammensetzung (PZ) mindestens eine Treibmittel enthält, und wobei als Treibmittel Wasser oder Wasser im Gemisch mit einem weiteren physikalischen oder chemischen Treibmittel eingesetzt wird,
wobei das weitere Treibmittel ausgewählt ist aus der Gruppe, bestehend aus Propan, n-Butan, iso und Cyclobutan , n-, iso-und Cyclopentan, Cyclohexan, Dimethylether, Methylethylether, Methylbutylether, Ameisensäuremethylester, Aceton, 1,3,3,3-Tetrafluorpropen, 1,1,1,2,3-Pentafluorpropen, 1,1,1,4,4,4-Hexafluorbuten und 1-Chlor-3,3,3-trifluorpropen,
wobei die Polyolzusammensetzung Wasser, sofern es als alleiniges Treibmittel eingesetzt wird, in einer Menge im Bereich von 1 bis 10 Gew.-%, bezogen auf das Gewicht der Polyolzusammensetzung (PZ), enthält, oder Wasser, sofern es in Kombination mit einem weiteren Treibmittel eingesetzt wird, in einer Menge im Bereich von 0,1 bis 5,0 Gew.-%, bezogen auf das Gewicht der Polyolzusammensetzung (PZ), enthält.

**9.** Verwendung gemäß Anspruch 8, wobei die Polyolzusammensetzung Wasser, sofern es als alleiniges Treibmittel eingesetzt wird, in einer Menge im Bereich von 3,5 bis 10 Gew.%, bezogen auf das Gewicht der Polyolzusammensetzung (PZ), enthält, oder Wasser, sofern es in Kombination mit einem weiteren Treibmittel eingesetzt wird, in einer Menge im Bereich von 0,1 bis 5,0 Gew.-%, bezogen auf das Gewicht der Polyolzusammensetzung (PZ), enthält.

**10.** Verwendung nach einem der Ansprüche 8 oder 9, wobei die Verbindung (I) ausgewählt ist aus der Gruppe bestehend aus Malonsäurediestern.

**11.** Verwendung nach einem der Ansprüche 8 bis 10, wobei die Verbindung (I) ausgewählt ist aus der Gruppe bestehend aus Malonsäuredimethylester, Malonsäurediethylester, Malonsäuredipropylester, Malonsäuredibutylester, Malonsäuredipentylester, Malonsäuredihexylester, Malonsäuremethyl-ethylester, Malonsäuremethyl-propylester, Malonsäuremethyl-butylester, Malonsäuremethyl-pentylester, Malonsäuremethyl-hexylester, Malonsäureethyl-propylester, Malonsäureethyl-butylester, Malonsäureethyl-pentylester, Malonsäureethyl-hexylester, Malonsäurepropyl-butylester, Malonsäurepropyl-pentylester, Malonsäurepropyl-hexylester, Malonsäurebutyl-pentylester, Malonsäurebutyl-hexylester und Malonsäurepentyl-hexylester.

**12.** Verwendung nach einem der Ansprüche 8 bis 11, wobei die Verbindung (I) in einer Menge im Bereich von 0,5 bis 10 Gew.-%, bezogen auf das Gewicht der Polyolzusammensetzung (PZ) eingesetzt wird.

**13.** Verwendung nach einem der Ansprüche 8 bis 12, wobei die Polyolzusammensetzung (PZ) mindestens eine Fettsäure oder einen Fettsäureester oder Mischungen davon enthält.

**14.** Verwendung nach einem der Ansprüche 8 bis 13, wobei die Polyolzusammensetzung (PZ) Rizinusöl enthält.

Europäisches Patentamt
European Patent Office
Office européen des brevets

# EUROPÄISCHER RECHERCHENBERICHT

Nummer der Anmeldung
EP 22 18 7191

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | JP 2005 264082 A (KAO CORP) 29. September 2005 (2005-09-29) * Absatz [0022]; Beispiele 1-5 * ----- | 1-14 | INV. C08G18/66 C08G18/76 C08J9/00 C08J9/08 C08J9/14 C08G18/09 C08K5/11 C08G18/40 C08G18/48 C08G18/42 |
| A | DE 199 26 312 A1 (HILTI AG [LI]) 14. Dezember 2000 (2000-12-14) * Tabelle; Seite 2, Zeilen 22,23; Anspruch 5 * ----- | 1-14 | |
| A | US 3 781 235 A (TROTT G ET AL) 25. Dezember 1973 (1973-12-25) * Anspruch 1; Beispiel 1 * ----- | 1-14 | |
| A | JP 2004 083847 A (CENTRAL GLASS CO LTD) 18. März 2004 (2004-03-18) * Anspruch 5 * ----- | 1-14 | |
| A | US 4 273 179 A (GARDIKES JOHN J) 16. Juni 1981 (1981-06-16) * Beispiel 2 * ----- | 1-14 | RECHERCHIERTE SACHGEBIETE (IPC) |
| X | US 6 136 876 A (MEIER INGRID KRISTINE [US] ET AL) 24. Oktober 2000 (2000-10-24) * Versuch 21 des Beispieles 1; Tabellen I,II * ----- | 1-7 | C08G C08J C08K |
| A | EP 0 716 112 A2 (AKZO NOBEL NV [NL]) 12. Juni 1996 (1996-06-12) * Beispiel 19 * ----- | 1-14 | |
| A | WO 95/18839 A1 (AKZO NOBEL NV [NL]; MARTL MICHAEL [DE] ET AL.) 13. Juli 1995 (1995-07-13) * Beispiel 14 * ----- | 1-14 | |
| A | DE 20 34 538 A1 (BAYER) 3. Februar 1972 (1972-02-03) * Beispiel 1 * ----- -/-- | 1-14 | |

Der vorliegende Recherchenbericht wurde für alle Patentansprüche erstellt

1

| Recherchenort | Abschlußdatum der Recherche | Prüfer |
|---|---|---|
| München | 1. Dezember 2022 | Lanz, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 22 18 7191

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| T | Anonymous: "Kältemittel – Wikipedia", , 14. April 2017 (2017-04-14), XP055369065, Gefunden im Internet: URL:https://de.wikipedia.org/wiki/Kältemittel [gefunden am 2017-05-03] * das ganze Dokument * ----- | 1-14 | |
| T | Anonymous: "List of refrigerants - Wikipedia", , 23. Mai 2017 (2017-05-23), XP055399550, Gefunden im Internet: URL:https://en.wikipedia.org/wiki/List_of_refrigerants [gefunden am 2017-08-18] * das ganze Dokument * ----- | 1-14 | |
| A | EP 0 859 019 A1 (BASF AG [DE]) 19. August 1998 (1998-08-19) * Spalte 15, Zeilen 13-19 * ----- | 1-14 | RECHERCHIERTE SACHGEBIETE (IPC) |
| A | EP 1 400 547 A1 (HILTI AG [LI]) 24. März 2004 (2004-03-24) * Absatz [0022] * ----- | 1-14 | |

Der vorliegende Recherchenbericht wurde für alle Patentansprüche erstellt

1

| Recherchenort | Abschlußdatum der Recherche | Prüfer |
|---|---|---|
| München | 1. Dezember 2022 | Lanz, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................................................
& : Mitglied der gleichen Patentfamilie, übereinstimmendes Dokument

EPO FORM 1503 03.82 (P04C03)

# ANHANG ZUM EUROPÄISCHEN RECHERCHENBERICHT ÜBER DIE EUROPÄISCHE PATENTANMELDUNG NR.

EP 22 18 7191

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-12-2022

| Im Recherchenbericht angeführtes Patentdokument | Datum der Veröffentlichung | Mitglied(er) der Patentfamilie | Datum der Veröffentlichung |
|---|---|---|---|
| JP 2005264082 A | 29-09-2005 | JP 4731821 B2 | 27-07-2011 |
| | | JP 2005264082 A | 29-09-2005 |
| DE 19926312 A1 | 14-12-2000 | CA 2309488 A1 | 09-12-2000 |
| | | CN 1290715 A | 11-04-2001 |
| | | DE 19926312 A1 | 14-12-2000 |
| | | EP 1059328 A1 | 13-12-2000 |
| | | HU 0002220 A2 | 28-12-2001 |
| | | JP 2001002750 A | 09-01-2001 |
| | | PL 340619 A1 | 18-12-2000 |
| | | US 6414045 B1 | 02-07-2002 |
| US 3781235 A | 25-12-1973 | CA 998800 A | 19-10-1976 |
| | | US 3781235 A | 25-12-1973 |
| JP 2004083847 A | 18-03-2004 | JP 4215553 B2 | 28-01-2009 |
| | | JP 2004083847 A | 18-03-2004 |
| US 4273179 A | 16-06-1981 | KEINE | |
| US 6136876 A | 24-10-2000 | BR 9905628 A | 28-11-2000 |
| | | CN 1254730 A | 31-05-2000 |
| | | EP 1002816 A2 | 24-05-2000 |
| | | JP 2000143761 A | 26-05-2000 |
| | | KR 20000035496 A | 26-06-2000 |
| | | US 6136876 A | 24-10-2000 |
| EP 0716112 A2 | 12-06-1996 | AR 000293 A1 | 22-10-1997 |
| | | AT 207094 T | 15-11-2001 |
| | | BR 9505694 A | 11-11-1997 |
| | | CA 2164805 A1 | 09-06-1996 |
| | | CN 1124257 A | 12-06-1996 |
| | | CO 4440535 A1 | 07-05-1997 |
| | | DE 4443648 A1 | 13-06-1996 |
| | | EP 0716112 A2 | 12-06-1996 |
| | | ES 2165404 T3 | 16-03-2002 |
| | | JP 3442555 B2 | 02-09-2003 |
| | | JP H08208822 A | 13-08-1996 |
| | | KR 960022680 A | 18-07-1996 |
| | | TW 388765 B | 01-05-2000 |
| WO 9518839 A1 | 13-07-1995 | AT 207095 T | 15-11-2001 |
| | | AU 685213 B2 | 15-01-1998 |
| | | BG 63398 B1 | 29-12-2001 |
| | | BR 9506428 A | 04-03-1997 |
| | | CA 2179632 A1 | 13-07-1995 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR.

EP 22 18 7191

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-12-2022

| Im Recherchenbericht angeführtes Patentdokument | Datum der Veröffentlichung | Mitglied(er) der Patentfamilie | Datum der Veröffentlichung |
|---|---|---|---|
| | | CN 1138339 A | 18-12-1996 |
| | | CO 4410247 A1 | 09-01-1997 |
| | | CZ 288250 B6 | 16-05-2001 |
| | | DE 4400300 A1 | 13-07-1995 |
| | | EP 0738292 A1 | 23-10-1996 |
| | | ES 2165413 T3 | 16-03-2002 |
| | | HR P941024 A2 | 31-10-1997 |
| | | HU 214670 B | 28-04-1998 |
| | | JP 3266265 B2 | 18-03-2002 |
| | | JP H09507514 A | 29-07-1997 |
| | | KR 100341042 B1 | 29-11-2002 |
| | | NZ 278069 A | 26-01-1998 |
| | | PL 181186 B1 | 29-06-2001 |
| | | PL 315746 A1 | 25-11-1996 |
| | | PT 738292 E | 29-04-2002 |
| | | RU 2151779 C1 | 27-06-2000 |
| | | SG 70952 A1 | 21-03-2000 |
| | | SK 87496 A3 | 09-04-1997 |
| | | TR 28770 A | 28-02-1997 |
| | | TW 393495 B | 11-06-2000 |
| | | UA 41970 C2 | 15-10-2001 |
| | | US 5684116 A | 04-11-1997 |
| | | WO 9518839 A1 | 13-07-1995 |
| | | ZA 9410366 B | 01-09-1995 |
| DE 2034538 A1 | 03-02-1972 | BE 769882 A | 16-11-1971 |
| | | CA 956762 A | 29-10-1974 |
| | | CH 589683 A5 | 15-07-1977 |
| | | CS 151596 B2 | 19-10-1973 |
| | | DE 2034538 A1 | 03-02-1972 |
| | | FR 2098343 A1 | 10-03-1972 |
| | | GB 1360054 A | 17-07-1974 |
| | | HU 171988 B | 28-05-1978 |
| | | JP S547829 B1 | 10-04-1979 |
| | | NL 7109606 A | 13-01-1972 |
| | | PL 85188 B1 | 30-04-1976 |
| | | RO 69565 A | 15-05-1980 |
| | | SE 370407 B | 14-10-1974 |
| | | SU 468436 A3 | 25-04-1975 |
| | | US B314049 I5 | 28-01-1975 |
| EP 0859019 A1 | 19-08-1998 | AT 274009 T | 15-09-2004 |
| | | CA 2227156 A1 | 17-08-1998 |
| | | DE 19705993 A1 | 20-08-1998 |
| | | EP 0859019 A1 | 19-08-1998 |
| | | US 6093342 A | 25-07-2000 |

EPO FORM P0461

Für nähere Einzelheiten zu diesem Anhang : siehe Amtsblatt des Europäischen Patentamts, Nr.12/82

# ANHANG ZUM EUROPÄISCHEN RECHERCHENBERICHT ÜBER DIE EUROPÄISCHE PATENTANMELDUNG NR.

EP 22 18 7191

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-12-2022

| Im Recherchenbericht angeführtes Patentdokument | Datum der Veröffentlichung | Mitglied(er) der Patentfamilie | Datum der Veröffentlichung |
|---|---|---|---|
| EP 1400547 A1 | 24-03-2004 | AT 356841 T | 15-04-2007 |
| | | AU 2003248202 A1 | 08-04-2004 |
| | | CA 2441246 A1 | 23-03-2004 |
| | | CN 1495213 A | 12-05-2004 |
| | | EP 1400547 A1 | 24-03-2004 |
| | | ES 2282569 T3 | 16-10-2007 |
| | | JP 4795632 B2 | 19-10-2011 |
| | | JP 2004131730 A | 30-04-2004 |
| | | PL 362347 A1 | 05-04-2004 |
| | | US 2004116545 A1 | 17-06-2004 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5798533 A
- WO 2004009667 A
- EP 1806374 A
- US 2008051481 A
- WO 2011039082 A1


### In der Beschreibung aufgeführte Nicht-Patentliteratur


- Polyurethane. Kunststoffhandbuch. Carl-Hanser-Verlag, 1966, vol. 7